# EUROPÄISCHE PATENTSCHRIFT

(11) **EP 2 614 002 B1**
(45) Veröffentlichungstag und Bekanntmachung des Hinweises auf die Patenterteilung: **13.04.2016**
(21) Anmeldenummer: 11758078.7
(22) Anmeldetag: 06.09.2011
(51) Int. Cl.: B64D 11/00, F16F 1/38, F16B 5/02, B62D 27/04, B64D 11/04, B64D 11/06

(54) **BEFESTIGUNGSEINRICHTUNG**
FIXING DEVICE
DISPOSITIF DE FIXATION

(30) Priorität: 06.09.2010 AT 14852010
(43) Veröffentlichungstag der Anmeldung: 17.07.2013
(73) Patentinhaber: FACC AG, 4910 Ried im Innkreis (AT)
(72) Erfinder: KAMMERER, Bernhard, A-4755 Zell an der Pram (AT)
(74) Vertreter: Sonn & Partner Patentanwälte
(86) Internationale Anmeldenummer: PCT/AT2011/000363
(87) Internationale Veröffentlichungsnummer: WO 2012/031310

(56) Entgegenhaltungen:
- EP-A1- 0 751 305
- EP-A1- 1 860 006
- EP-A2- 1 792 827
- GB-A- 2 419 854

## Beschreibung

Die Erfindung betrifft eine Einrichtung zur schwingungsfreien Befestigung von Einbauten, insbesondere von Wand- oder Bodenelementen in Flugzeugen, an einer Struktur, mit einem Befestigungselement, welches an einem Ende zur Fixierung an der Struktur und am gegenüberliegenden Ende zur Aufnahme der Einbauten ausgebildet ist, wobei das gegenüberliegende Ende des Befestigungselements in einer mit den aufzunehmenden Einbauten verbindbaren Distanzhülse verschiebbar gelagert und zur Fixierung an den Einbauten ausgebildet ist, und zumindest ein Dämpfungselement zur Anordnung zwischen der Struktur und den Einbauten vorgesehen ist, wobei das eine Ende des durch einen Schraubbolzen mit einem Schraubenkopf und einem Gewinde gebildeten Befestigungselements mit einem Standfuß verbunden ist.

Insbesondere in Flugzeugen ist es erforderlich diverse Einbauten, wie z.B. Wand- oder Bodenelemente, schwingungsfrei bzw. schwingungsentkoppelt mit der tragenden Struktur des Flugzeuges zu verbinden. Derartige Befestigungselemente sind jedoch auch abseits von Flugzeugen denkbar, wo es darum geht, schwingungstechnisch entkoppelte Anbindungen diverser Einbauten vorzunehmen.

Die EP 0 751 305 A1 betrifft eine Einrichtung zur Befestigung von Einbauten der gegenständlichen Art, durch welche keine optimale Dämpfung von Schwingungen und keine optimale Entkopplung des Systems möglich ist und zeigt eine Einrichtung gemäß dem Oberbegriff des Anspruchs 1.

Die WO 82/00324 A1 und die JP 63074726 A zeigen Einrichtungen zur schwingungsfreien Befestigung gemäß der gegenständlichen Art.

Die DE 20 2010 000 965 U1 zeigt eine Vorrichtung zum Befestigen von Sandwichplatten an Fahrzeugen.

Eine gedämpfte Befestigung eines Bodenelements mit Hilfe entsprechend gestalteter, gedämpfter Füße ist beispielsweise in der JP 2007277884 A geoffenbart.

Eine ähnliche Konstruktion ist in der WO 2008/072982 A1 beschrieben, wobei eine Höhenverstellbarkeit über ein Gewinde am Abstandhalter, entlang dem ein entsprechendes Element, auf dem die Fußbodenelemente aufliegen, bewegt werden kann, erzielbar ist.

Schließlich zeigt die US 2007/0262212 A1 eine Befestigungseinrichtung zur Anordnung von Einbauten in einem Flugzeug, wo eine Verstellbarkeit in vertikaler Richtung gegeben ist. Eine Schwingungsdämpfung ist dabei allerdings nicht integriert.

Die Aufgabe der vorliegenden Erfindung besteht in der Schaffung einer oben genannten Befestigungseinrichtung, welche eine schwingungstechnisch entkoppelte und einstellbare Anbindung von Einbauten, insbesondere in Flugzeugen, ermöglicht. Das Gewicht der Befestigungseinrichtung soll insbesondere bei einer Anwendung in Flugzeugen möglichst gering sein. Nachteile bekannter Befestigungseinrichtung sollen vermieden oder zumindest reduziert werden.

Gelöst wird die erfindungsgemäße Aufgabe durch eine oben genannte Befestigungseinrichtung, wobei der Standfuß zur verschieblichen Lagerung in einem an der Struktur angeordneten Schienenprofil ausgebildet ist, das zumindest eine Dämpfungselement um die Distanzhülse angeordnet und durch zumindest zwei beiderseits der Einbauten angeordnete Dämpfungsscheiben gebildet ist, der Schraubbolzen mit zwei Scheiben mit einer Verrippung an den zueinander orientierten Flächen versehen ist und die Distanzhülse einen langloch-förmigen Querschnitt aufweist und die zumindest zwei Dämpfungsscheiben und die zwei Scheiben mit der Verrippung ein Langloch enthalten. Durch die verschiebbare Lagerung des Befestigungselements in der Distanzhülse mit Langloch-förmigem Querschnitt ist eine Einstellbarkeit und somit ein Toleranzausgleich möglich. Bei der Anwendung in Flugzeugen ist eine solche Einstellbarkeit in Flugzeuglängsrichtung zugelassen und zum Ausgleich von Toleranzen auch notwendig. Durch das zumindest eine Dämpfungselement wird die schwingungsfreie bzw. schwingungsentkoppelte Befestigung ermöglicht. Das Schienenprofil wird an der Struktur angeordnet oder ist bereits in dieser integriert und das Befestigungselement kann in entsprechend gewünschten Positionen relativ zu den zu befestigenden Einbauten darin platziert werden. Mit der verschieblichen Lagerung der Befestigungselemente im Schienenprofil wird eine grobe Anordnung der Einbauten erreicht. Die Feineinstellung zum Ausgleich von Toleranzen erfolgt über die oben beschriebene Distanzhülse mit Langloch-förmigem Querschnitt. Die durch einen Schraubbolzen mit einem Schraubenkopf und einem Gewinde gebildete Ausführungsvariante des Befestigungselements stellt eine besonders einfache und kostengünstige, sowie auch gewichtsmäßig relativ leichte Ausführungsform dar. Selbstverständlich kann das Befestigungselement auch durch einen einstückig mit dem Standfuß gebildeten Bolzen mit einem Gewinde an seinem freien Ende und einer darauf aufschraubbaren Mutter gebildet sein. Dadurch, dass das zumindest eine Dämpfungselement um die Distanzhülse angeordnet ist, kann die schwingungstechnische Entkopplung erzielt werden. Natürlich könnte auch die Distanzhülse selbst aus einem dämpfenden Material bestehen oder mit einem solchen beschichtet sein. Zur Gewährleistung eines Kraftflusses zur Struktur in Form eines Formschlusses ist der Schraubbolzen mit zwei Scheiben mit einer Verrippung an den zueinander orientierten Flächen versehen.

Vorteilhaferweise ist eine Fixiereinrichtung zur Fixierung des Standfußes des Befestigungselements im Schienenprofil vorgesehen. Je nach Ausbildung des Schienenprofils und des Standfußes des Befestigungselements kann diese Fixiereinrichtung unterschiedlich ausgebildet sein.

Beispielsweise kann die Fixiereinrichtung durch ein in entsprechende Ausnehmungen im Schienenprofil einrastbares Keilstück gebildet sein. Das Keilstück wird dabei korrespondierend zu den Ausnehmungen im Schienenprofil gestaltet und kann an der gewünschten Stelle, an der das Befestigungselement platziert werden soll, im Schienenprofil einrasten und eine Verschiebung des Befestigungselements verhindern.

Vorzugsweise sind zumindest zwei Dämpfungsscheiben an der Distanzhülse verankert. Eine derartige Verankerung kann durch entsprechende Verankerungselemente an der Distanzhülse, die in das elastische Material der Dämpfungsscheiben eindringen, gebildet sein. Diese Anordnung ermöglicht eine einfache und effiziente Entkopplung allenfalls auftretender Schwingungen.

Dabei ist es von Vorteil, wenn die Dämpfungsscheiben aus Silikongummi gebildet sind. Silikon weist gute Verarbeitbarkeit und optimale Dämpfungseigenschaften auf.

Um eine ungewollte Lösung der Befestigung der Einbauten am Befestigungselement zu verhindern, kann der Schraubbolzen mit einem Verdrehschutz versehen sein. Ein derartiger Schutz vor ungewollter Lösung des Schraubbolzens kann beispielsweise durch einen an sich bekannten Sprengring gebildet werden.

Der Schraubbolzen des Befestigungselements, auf den höhere Kräfte einwirken, ist vorzugsweise aus Stahl gebildet.

Vorteilhafterweise wird das Schienenprofil aus Leichtmetall, wie z.B. Aluminium, gebildet.

Insbesondere bei der Befestigung von Wandelementen an einer Struktur ist es von Vorteil, wenn das eine Ende des Befestigungselements durch ein Profilstück, beispielsweise T-Profil, gebildet oder mit einem solchen Profilstück verbindbar ist, welches Profilstück mit der Struktur verbindbar ist. Anstelle des Profilstücks kann das Ende des Befestigungselements auch direkt mit der Struktur verbunden werden. Die Struktur kann aus einem beliebigen Profil gebildet werden oder auch nur eine gerade Fläche aufweisen.

Das gegenüberliegende Ende des Befestigungselements ist über die Distanzhülse mit den Einbauten, insbesondere dem Wandelement verbindbar.

Die vorliegende Erfindung wird anhand der beigefügten Zeichnungen, welche Ausführungsbeispiele der Befestigungseinrichtung zeigen, näher erläutert.

Darin zeigt:
Fig. 1 einen Querschnitt durch eine Ausführungsform einer Befestigungseinrichtung zur Befestigung eines Bodenelements, beispielsweise in einem Flugzeug quer zur Längerstreckung des Flugzeugs gesehen;
Fig. 2 einen Querschnitt durch die Ausführungsform der Befestigungseinrichtung gemäß Fig. 1 in Längsrichtung gesehen;
Fig. 3 die Befestigungseinrichtung gemäß den Fig. 1 und 2 in Explosionsdarstellung;
Fig. 4 ein Schnittbild durch die Befestigungseinrichtung gemäß Fig. 2 entlang der Schnittlinie IV-IV; und
Fig. 5 eine Ausführungsform einer Befestigungseinrichtung zur Befestigung eines Wandelements in Explosionsdarstellung.

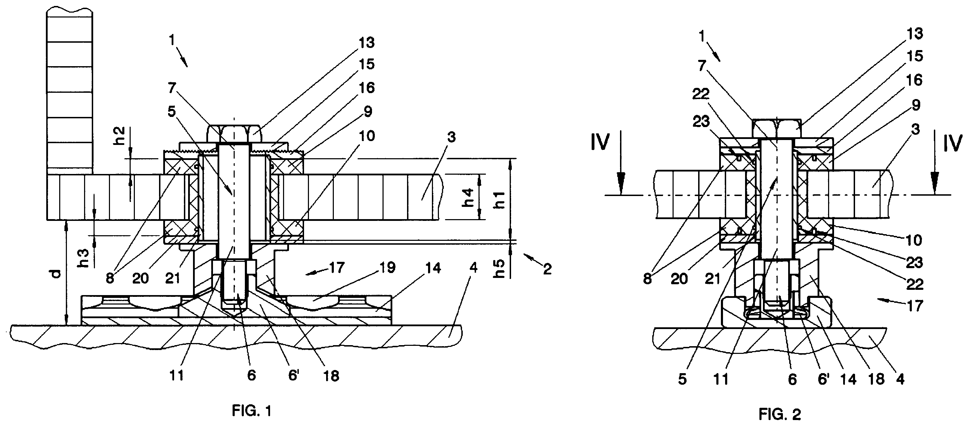

Fig. 1 und 2 zeigt eine Ausführungsform einer Befestigungseinrichtung 1 für die Befestigung von Einbauten 2 in Form eines Bodenelements 3, in einem Abstand d von einer Struktur 4, beispielsweise in einem Flugzeug. Fig. 1 zeigt die an den Einbauten 2 angeordnete Befestigungseinrichtung 1 quer zur Längsrichtung des Flugzeugs, Fig. 2 zeigt die Befestigungseinrichtung 1 in Längsrichtung des Flugzeuges gesehen. Die Befestigungseinrichtung 1 besteht aus einem Befestigungselement 5 mit einem Ende 6, das als Standfuß 6' ausgebildet ist, der zur Auflage an der Struktur 4 ausgebildet ist. Das dem eine Ende 6 bzw. Standfuß 6' gegenüberliegende Ende 7 des Befestigungselements 5 ist zur Aufnahme der Einbauten 2, insbesondere des Bodenelements 3, entsprechend ausgebildet. Zur Verstellbarkeit der Befestigungseinrichtung 1 in horizontaler Richtung, das heißt in der Ebene der Struktur 4, ist der Standfuß 6' des Befestigungselements 5 innerhalb eines an der Struktur 4 angeordneten Schienenprofils 14 verschiebbar gelagert. Über dieses Schienenprofil 14 erfolgt somit eine grobe Verschiebung der Befestigungseinrichtung 1. Das Schienenprofil 14 kann selbstverständlich auch einstückig mit der Struktur 4 ausgebildet bzw. in diesem integriert sein. Zur Fixierung des Standfußes 6' im Schienenprofil 14 kann eine entsprechende Fixiereinrichtung 17 vorgesehen sein. Diese Fixiereinrichtung 17 kann durch ein Keilstück 18 gebildet sein, welches in entsprechende Ausnehmungen 19 im Schienenprofil 14 einrastet. Durch Befestigung des Befestigungselements 5 wird der Standfuß 6' von unten und gleichzeitig das Keilstück 18 von oben gegen das Schienenprofil 14 gedrückt, wodurch das Schienenprofil 14 geklemmt und ein Kraftfluss in die Struktur 4 ermöglicht wird.

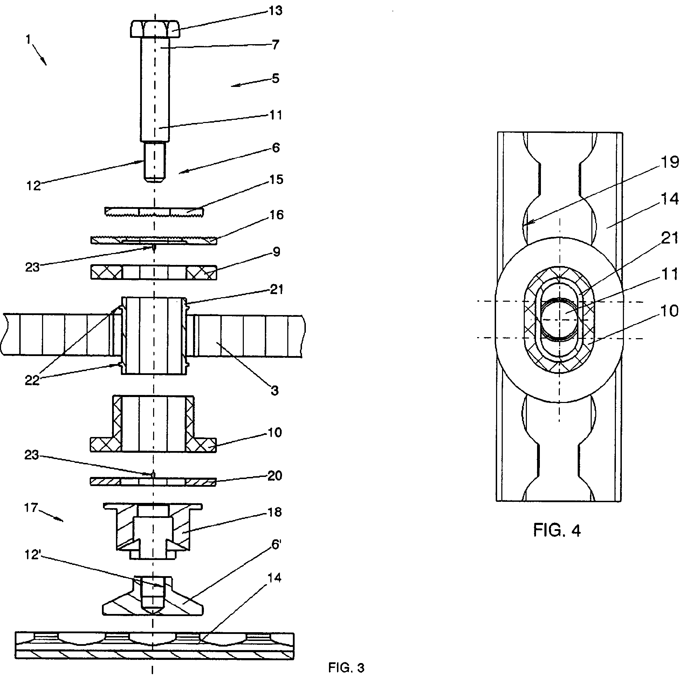

Zum Ausgleich von Toleranzen ist das gegenüberliegende Ende 7 des Befestigungselements 5 in einer mit den aufzunehmenden Einbauten 2 verbindbaren Distanzhülse 21 mit Langloch-förmigem Querschnitt (siehe Fig. 4) verschiebbar gelagert und zur Fixierung an den Einbauten 2 ausgebildet. Durch die Form der Distanzhülse 21 und deren Anordnung am Bodenelement 3 ist eine Verstellbarkeit in Längsrichtung zum Ausgleich von Toleranzen möglich. Quer zur Flugzeuglängsrichtung hingegen und auch in der Höhe ist die Befestigungseinrichtung 1 nicht verschiebbar bzw. einstellbar.

Zur Dämpfung von Schwingungen ist um die Distanzhülse 21 zumindest ein Dämpfungselement 8 angeordnet, welches hier durch zwei beiderseits der Einbauten 2 bzw. des Bodenelements 3 angeordnete Dämpfungsscheiben 9, 10 gebildet sein kann. Die Dämpfungsscheiben 9, 10 sind vorzugsweise aus Silikongummi gebildet. Zur Fixierung der Dämpfungsscheiben 9, 10 können an der Außenseite der Distanzhülse 21 Verankerungselemente 22 angeordnet sein, welche in das elastische Material der Distanzscheiben 9, 10 eindringen und diese somit fixieren.

Das Befestigungselement 5 ist beispielsweise aus einem Schraubbolzen 11 gebildet, der einen Schraubenkopf 13 und ein Gewinde 12 aufweist, über welches der Schraubbolzen 11 in ein entsprechendes Gewinde 12' im Standfuß 6 eindrehbar ist. Unterhalb des Schraubenkopfes 13 des Schraubbolzens 11 kann zusätzlich ein Verdrehschutz angeordnet, der aus einem Sprengring gebildet ist. Um den Kraftfluss zur Struktur in Form eines Formschlusses zu gewährleisten, können auch zwei Scheiben 15, 16, die mit einer Verrippung an den zueinander orientierten Flächen ausgebildet sind, angeordnet sein. Zusätzlich kann zwischen der unteren Dämpfungsscheibe 10 und der Fixiereinrichtung 17 bzw. dem Keilstück 18 eine Beilagscheibe 20 angeordnet sein. Die genannte Scheibe 16 mit der Verrippung sowie die Beilagscheibe 20 kann ebenfalls mit einem Verankerungselement 23 versehen sein, welches in das elastische Material der Dämpfungsscheiben 9 bzw. 10 dringen und diese somit fixieren. Durch die Verankerungselemente 22 und 23 ist es möglich, das Bodenelement 3 zusammen mit der Distanzhülse 21, den Dämpfungsscheiben 9, 10, der unteren Scheibe 16 mit der Verrippung und der Beilagscheibe 20 zu liefern. Dadurch ergibt sich eine vereinfachte und unkomplizierte Montage.

Sowohl in der Distanzhülse 21 als auch den Dämpfungsscheiben 9, 10, der Scheibe 16 mit der Verrippung als auch der Beilagscheibe 20 ist ein Langloch enthalten, welches die Verstellung des Bodenelements 3 gegenüber dem Befestigungselement 5 zulässt (siehe Fig. 4).

Die Höhe h1 der Distanzhülse 21 ist vorzugsweise kleiner als die Summe der Höhen h2, h3 der Dämpfungsscheiben 9, 10 und der Höhe h4 der zu befestigenden Einbauten 2 bzw. des Bodenelements 3. Dadurch wird eine optimale schwingungstechnische Entkopplung der Befestigungseinrichtung 1 erzielt.

Der Schraubbolzen 11 und der Standfuß 6' des Befestigungselements 5 sind vorzugsweise aus Stahl gebildet. Zur Reduktion des Gesamtgewichts sind das Schienenprofil 14 sowie die Scheiben 15, 16 vorzugsweise aus Aluminium hergestellt. Auch die Fixiereinrichtung 17, insbesondere das Keilstück 18, sowie die allfällige Beilagscheibe 20 sind auf Grund der höheren Anforderungen hinsichtlich Festigkeit vorzugsweise aus Stahl gebildet.

Durch die erfindungsgemäße Befestigungseinrichtung 1 ist eine schwingungstechnisch entkoppelte und einstellbare Anbindung von Einbauten 2, insbesondere in Flugzeugen, möglich. Im Zusammengebauten Zustand erfolgt der Kraftfluss der Vorspannung über den Schraubenkopf 13 des Schraubbolzens 11 zur oberen Scheibe 15 mit der Verrippung und danach zur unteren Scheibe 16 mit der Verrippung und weiter über die Distanzhülse 21 und nicht über die Dämpfungselemente 8. Bevor jedoch die Distanzhülse 21 den Kraftfluss übernimmt, müssen die Dämpfungsscheiben 9, 10 um je ca. 0,5mm durch den Schraubbolzen 11 vorgespannt bzw. zusammengedrückt werden um eine Dämpfung zu gewährleisten. Deshalb müssen die Distanzen bzw. Höhen h2 der oberen Dämpfungsscheibe 9 und die Höhe h3 der unteren Dämpfungsscheibe 10 und die Höhe h4 des Bodenelements 3 gemeinsam größer sein als die Höhe h1 der Distanzhülse 21. Die Summe dieser Distanzen bzw. Höhen entspricht vorzugsweise der Summe der Höhe h1 der Distanzhülse 21 und dem Abstand h5. Die Distanzhülse 21 wird somit soweit nach unten gedrückt bis sie am Keilstück 18 ansteht und den Kraftfluss an dieses weiterleitet. Der Abstand h5 zwischen der unteren Seite der Distanzhülse 21 und der unteren Fläche der Beilagscheibe 20 ist beispielsweise 2mal ca. 0,5mm. Somit werden die Dämpfungsscheiben 9, 10 vor einer zu starken Pressung geschützt, wodurch die Dämpfung gefährdet werden könnte.

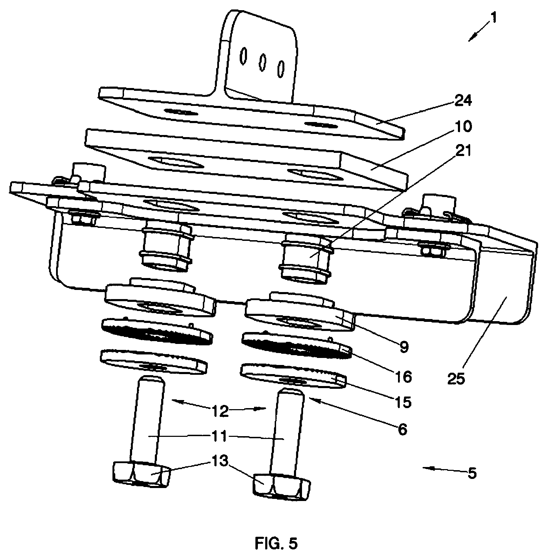

Fig. 5 zeigt ein weiteres Ausführungsbeispiel einer Befestigungseinrichtung 1 zur Befestigung eines Wandelements (nicht dargestellt) an einer tragenden Struktur 4 (nicht dargestellt) in Explosionsdarstellung. Dabei sind zwei Befestigungselemente 5 nebeneinander angeordnet und durch einen Schraubbolzen 11 mit einem Schraubenkopf 13 und einem Gewinde 12 ausgebildet. Das eine Ende 6 des Befestigungselements 5 ist zur Fixierung an der Struktur 4 ausgebildet. Im dargestellten Beispiel sind die Enden 6 der Befestigungselemente 5 mit einem Profilstück 24, insbesondere einem T-Profil, verbindbar, das wiederum mit der tragenden Struktur 4 (nicht dargestellt) verschraubt werden kann. Das gegenüberliegende Ende 7 der Befestigungselemente 5 ist über die Distanzhülsen 21 mit Langloch-förmigem Querschnitt verschiebbar gelagert und beispielsweise über eine entsprechende Befestigungsstruktur 25 mit den Einbauten 2, hier einem Wandelement 3 (nicht dargestellt), verbindbar. Als Dämpfungselement sind zwei Dämpfungsscheiben 9, 10 aus entsprechend dämpfendem Material, beispielsweise Silikongummi, vorgesehen. Über Scheiben 15, 16 mit einer Verrippung an den zueinander orientierten Flächen wird ein formschlüssiger Kraftfluss zur Struktur erzielt. Durch die Distanzhülsen 21 mit Langloch-förmigem Querschnitt wird ein Verstellbarkeit zum Ausgleich von Toleranzen erzielt. Die Befestigungsstruktur 25 kann auch zur Fixierung zweier oder mehrerer Wandelemente ausgebildet sein (nicht dargestellt).

## Patentansprüche

1. Einrichtung (1) zur schwingungsfreien Befestigung von Einbauten (2), insbesondere von Wand- oder Bodenelementen (3) in Flugzeugen, an einer Struktur (4), mit einem Befestigungselement (5), welches an einem Ende (6) zur Fixierung an der Struktur (4) und am gegenüberliegenden Ende (7) zur Aufnahme der Einbauten (2) ausgebildet ist, wobei das gegenüberliegende Ende (7) des Befestigungselements (5) in einer mit den aufzunehmenden Einbauten (2) verbindbaren Distanzhülse (21) verschiebbar gelagert und zur Fixierung an den Einbauten (2) ausgebildet ist, und zumindest ein Dämpfungselement (8) zur Anordnung zwischen der Struktur (4) und den Einbauten (2) vorgesehen ist, wobei das eine Ende (6) des durch einen Schraubbolzen (11) mit einem Schraubenkopf (13) und einem Gewinde (12) gebildeten Befestigungselements (5) mit einem Standfuß (6') verbunden ist, **dadurch gekennzeichnet, dass** der Standfuß (6') zur verschieblichen Lagerung in einem an der Struktur (4) angeordneten Schienenprofil (14) ausgebildet ist, dass das zumindest eine Dämpfungselement (8) um die Distanzhülse (21) angeordnet und durch zumindest zwei beiderseits der Einbauten (2) anordenbare Dämpfungsscheiben (9, 10) gebildet ist, dass der Schraubbolzen (11) mit zwei Scheiben (15, 16) mit einer Verrippung an deren zueinander orientierten Flächen versehen ist, und dass die Distanzhülse (21) Langloch-förmigen Querschnitt aufweist und die zumindest zwei Dämpfungsscheiben (9, 10) und die zwei Scheiben (15, 16) mit der Verrippung ein Langloch enthalten.

2. Befestigungseinrichtung (1) nach Anspruch 1, **dadurch gekennzeichnet, dass** eine Fixiereinrichtung (17) zur Fixierung des Standfußes (6') im Schienenprofil (14) vorgesehen ist.

3. Befestigungseinrichtung (1) nach Anspruch 2, **dadurch gekennzeichnet, dass** die Fixiereinrichtung (17) durch ein in entsprechende Ausnehmungen (19) im Schienenprofil (14) einrastbares Keilstück (18) gebildet ist.

4. Befestigungseinrichtung (1) nach einem der Ansprüche 1 bis 3, **dadurch gekennzeichnet, dass** die zumindest zwei Dämpfungsscheiben (9, 10) an der Distanzhülse (21) verankert sind.

5. Befestigungseinrichtung (1) nach einem der Ansprüche 1 bis 4, **dadurch gekennzeichnet, dass** die Dämpfungsscheiben (9, 10) aus Silikongummi gebildet sind.

6. Befestigungseinrichtung (1) nach einem der Ansprüche 1 bis 5, **dadurch gekennzeichnet, dass** der Schraubbolzen (11) mit einem Verdrehschutz, beispielsweise einem Sprengring, versehen ist.

7. Befestigungseinrichtung (1) nach einem der Ansprüche 1 bis 6, **dadurch gekennzeichnet, dass** der Schraubbolzen (11) aus Stahl gebildet ist.

8. Befestigungseinrichtung (1) nach einem der Ansprüche 1 bis 7, **dadurch gekennzeichnet, dass** das Schienenprofil (14) aus Aluminium gebildet ist.

9. Befestigungseinrichtung (1) nach einem der Ansprüche 1 bis 8, **dadurch gekennzeichnet, dass** das eine Ende (6) des Befestigungselements (5) durch ein Profilstück (24) gebildet oder mit einem Profilstück (24) verbindbar ist, welches Profilstück (24) mit der Struktur (4) verbindbar ist.

10. Befestigungseinrichtung (1) nach einem der Ansprüche 1 bis 9, **dadurch gekennzeichnet, dass** das gegenüberliegende Ende (6) des Befestigungselements (5) über die Distanzhülse (21) mit den Einbauten (2) verbindbar ist.

## Claims

1. A device (1) for fastening fittings (2), in particular wall or floor elements (3) in airplanes, to a structure (4) such that no vibrations are generated, including a fastening element (5) which is designed on one end (6) for fastening to the structure (4) and on the opposite end (7) for receiving the fittings (2), wherein the opposite end (7) of the fastening element (5) is movably mounted in a spacer sleeve (21) that can be connected to the fittings (2) to be received and is designed for fastening to the fittings (2), and at least one damping element (8) is provided for arrangement between the structure (4) and the fittings (2), wherein the one end (6) of the fastening element (5) formed by a bolt (11) having a bolt head (13) and a thread (12) is connected to a foot (6'), **characterized in that** foot (6') is designed for movable mounting in a rail section (14) arranged on the structure (4), that the at least one damping element (8) is arranged about the spacer sleeve (21) and formed by at least two damping discs (9, 10) capable of being arranged on both sides of the fittings (2), that the bolt (11) is provided with two discs (15, 16) having ribs on their surfaces oriented to each other, and that the spacer sleeve (21) has an elongated hole-shaped cross-section, and the at least two damping discs (9, 10) and the two ribbed discs (15, 16) comprise elongated holes.

2. A fastening device (1) according to claim 1, **characterized in that** a fixing device (17) for fixing the foot (6') in the rail section (14) is provided.

3. A fastening device (1) according to claim 2, **characterized in that** said fixing device (17) is formed by a wedge-shaped piece (18) that can snap into respective recesses (19) provided in the rail section (14).

4. A fastening device (1) according to any one of claims 1 to 3, **characterized in that** the at least two damping discs (9, 10) are anchored to the spacer sleeve (21).

5. A fastening device (1) according to any one of claims 1 to 4, **characterized in that** the damping discs (9, 10) are made of silicone rubber.

6. A fastening device (1) according to any one of claims 1 to 5, **characterized in that** the bolt (11) is provided with an anti-twist protection, e.g. a retainer ring.

7. A fastening device (1) according to any one of claims 1 to 6, **characterized in that** the bolt (11) is made of steel.

8. A fastening device (1) according to any one of claims 1 to 7, **characterized in that** the rail section (14) is made of aluminum.

9. A fastening device (1) according to any one of claims 1 to 8, **characterized in that** the one end (6) of the fastening element (5) is formed by a profile piece (24) or can be connected to a profile piece (24), which profile piece (24) is connectable to the structure (4).

10. A fastening device (1) according to any one of claims 1 to 9, **characterized in that** the opposite end (7) of the fastening element (5) is connectable to the fittings (2) via the spacer sleeve (21).

## Revendications

1. Dispositif (1) pour la fixation sans vibrations d'équipements (2), plus particulièrement d'éléments de parois ou de plancher (3) dans des avions, sur une structure (4), avec un élément de fixation (5), qui est conçu, à une extrémité (6), pour la fixation à la structure (4), et à l'extrémité opposée (7), pour le logement des équipements (2), l'extrémité opposée (7) de l'élément de fixation (5) étant logée de manière coulissante dans un manchon d'écartement (21) pouvant être relié avec les équipements à loger et destinée à être fixé sur les équipements (2), et au moins un élément d'amortissement (8) étant destiné à être disposé entre la structure (4) et les équipements (2), l'extrémité (6) de l'élément de fixation (5), constituée d'une tige filetée (11) avec une tête de vis (13) et un filetage (12), étant reliée à un pied (6'), **caractérisé en ce que** le pied (6') est conçu pour un logement coulissant dans un profilé de rail (14) disposé sur la structure (4), **en ce que** l'au moins un élément d'amortissement (8) est disposé autour du manchon d'écartement (21) et est constitué d'au moins deux rondelles d'amortissement (9, 10) pouvant être disposés des deux côtés des équipements (2), **en ce que** la tige filetée (11) est munie de deux rondelles (15, 16) avec des nervures au niveau de ses surfaces orientées l'une vers l'autre, et **en ce que** le manchon d'écartement (21) présente une section transversale de forme oblongue et les au moins deux rondelles d'amortissement (9, 10) et les deux rondelles (15, 16) avec les nervures contiennent un trou oblong.

2. Dispositif de fixation (1) selon la revendication 1, **caractérisé en ce qu'**un dispositif de fixation (17) est prévu pour la fixation du pied (6') dans le profilé de rail (14).

3. Dispositif de fixation (1) selon la revendication 2, **caractérisé en ce que** le dispositif de fixation (17) est constitué par une cale (18) pouvant être encliquetée dans des évidements (19) correspondants dans le profilé de rail (14).

4. Dispositif de fixation (1) selon l'une des revendications 1 à 3, **caractérisé en ce que** les au moins deux rondelles d'amortissement (9, 10) sont ancrées au manchon d'écartement (21).

5. Dispositif de fixation (1) selon l'une des revendications 1 à 4, **caractérisé en ce que** les rondelles d'amortissement (9, 10) sont constituées de caoutchouc au silicone.

6. Dispositif de fixation (1) selon l'une des revendications 1 à 5, **caractérisé en ce que** la tige filetée (11) est munie d'une protection anti-rotation, par exemple un circlip.

7. Dispositif de fixation (1) selon l'une des revendications 1 à 6, **caractérisé en ce que** la tige filetée (11) est constituée d'acier.

8. Dispositif de fixation (1) selon l'une des revendications 1 à 7, **caractérisé en ce que** le profilé de rail (14) est constitué d'aluminium.

9. Dispositif de fixation (1) selon l'une des revendications 1 à 8, **caractérisé en ce qu'**une extrémité (6) de l'élément de fixation (5) est constituée d'une pièce profilée (24) ou peut être relié avec une pièce profilée (24), cette pièce profilée (24) pouvant être reliée avec la structure (4).

10. Dispositif de fixation (1) selon l'une des revendications 1 à 9, **caractérisé en ce que** l'extrémité opposée (6) de l'élément de fixation (5) peut être reliée, par l'intermédiaire du manchon d'écartement (21), avec les équipements (2).
